# EUROPEAN PATENT SPECIFICATION

(11) **EP 3 996 409 B1**
(45) Date of publication and mention of the grant of the patent: **24.06.2026**
(21) Application number: 20850142.9
(22) Date of filing: 07.08.2020
(51) Int. Cl.: H04W 24/04, H04W 36/12, H04W 40/34, H04W 76/36, H04W 40/22, H04L 45/74, H04W 88/04, H04B 7/155, H04W 76/14, H04W 88/08

(54) **COMMUNICATION CONTROL METHOD AND RELAY DEVICE**
VERFAHREN ZUR KOMMUNIKATIONSSTEUERUNG UND RELAISVORRICHTUNG
PROCÉDÉ DE COMMANDE DE COMMUNICATION ET DISPOSITIF RELAIS

(30) Priority: 07.08.2019 JP 2019145743
(43) Date of publication of application: 11.05.2022
(73) Proprietor: Kyocera Corporation, Kyoto-shi Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2020/030337
(87) International publication number: WO 2021/025145

(56) References cited:
- WO-A1-2022/025736
- CN-A- 102 405 682
- US-A1- 2022 029 694
- US-A1- 2022 225 129
- US-A1- 2023 036 769
- HUAWEI ET AL: "Routing function and configuration", vol. RAN WG2, no. Reno, USA; 20190513 - 20190517, 13 May 2019 (2019-05-13), XP051729541, Retrieved from the Internet <URL:http://www.3gpp.org/ftp/Meetings%5F3GPP%5FSYNC/RAN2/Docs/R2%2D1906064%2Ezip> [retrieved on 20190513]
- QUALCOMM: "CR to 38.300 on Integrated Access and Backhaul for NR", vol. RAN WG2, no. Reno, NV, USA; 20191118 - 20191122, 10 December 2019 (2019-12-10), XP051838777, Retrieved from the Internet <URL:https://ftp.3gpp.org/Email_Discussions/RAN2/%5BRAN2%23108%5D/%5B108%2310%5D%5BIAB%5D%20Running%20CR%2038300/draft%20R2-19xxxxx%20IAB%20running%20CR%20for%2038300.docx> [retrieved on 20191210]
- "3rd Generation Partnership Project; Technical Specification Group Radio Access Network; NR; Backhaul Adaptation Protocol (BAP) specification (Release 16)", vol. RAN WG2, no. V1.0.0, 10 March 2020 (2020-03-10), pages 1 - 21, XP051861017, Retrieved from the Internet <URL:ftp://ftp.3gpp.org/Specs/archive/38_series/38.340/38340-100.zip 38340-100.doc> [retrieved on 20200310]
- "3rd Generation Partnership Project; Technical Specification Group Radio Access Network; NR; NR and NG-RAN Overall Description; Stage 2 (Release 16)", 16 July 2020 (2020-07-16), XP051909170, Retrieved from the Internet <URL:https://ftp.3gpp.org/tsg_ran/WG2_RL2/Specifications/202007_draft_specs_after_RAN_88/Draft_38300-g20.docx> [retrieved on 20200716]
- HUAWEI ET AL: "Remaining issues for routing", vol. RAN WG2, no. Reno, NV, USA; 20191118 - 20191122, 8 November 2019 (2019-11-08), XP051817234, Retrieved from the Internet <URL:https://ftp.3gpp.org/tsg_ran/WG2_RL2/TSGR2_108/Docs/R2-1915456.zip R2-1915456 Remaining issues for routing.docx> [retrieved on 20191108]
- QUALCOMM INCORPORATED: "Support for NR IAB", 3GPP DRAFT; S2-1907203-SUPPORT FOR NR_IAB V6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sapparo, Japan, USA; 20190624 - 20190628, 18 June 2019 (2019-06-18), Mobile Competence Centre ; 650, route des Lucioles ; F-06921 Sophia-Antipolis Cedex ; France, pages 1 - 8, XP051752172

## Description

### Technical Field

The present disclosure relates to a communication control method, a chipset, and a relay apparatus that are used in a mobile communication system.

### Background Art

In the 3rd Generation Partnership Project (3GPP), which is a standardization project of a mobile communication system, a new relay apparatus referred to as an Integrated Access and Backhaul (IAB) node has been under study. One or a plurality of relay apparatuses are involved in communication between a base station used as a donor apparatus and a user equipment, and perform relay for the communication.

Such a relay apparatus includes a user equipment function and a base station function, and performs wireless communication with an upper apparatus (the base station or an upper relay apparatus) by using the user equipment function and performs wireless communication with a lower apparatus (the user equipment or a lower relay apparatus) by using the base station function.

A wireless section between the user equipment and the relay apparatus or the base station may be referred to as an access link. A wireless section between the relay apparatus and the base station or another relay apparatus may be referred to as a backhaul link. Non-Patent Literature 1 describes a method of dynamically switching data transfer paths by integrating and multiplexing, in Layer 2, data communication in the access link and data communication in the backhaul link and dynamically allocating radio resources to the backhaul link.

HUAWEI ET AL, "Routing function and configuration", 3GPP TSG-RAN WG2 meeting #106, Reno (USA) 13th to 17th May 2019 (XP051729541) discusses routing configurations and update mechanisms for wireless backhaul links in an IAB network.

QUALCOMM, "CR to 38.300 on Integrated Access and Backhaul for NR", 3GPP TSG-RAN WG2 meeting #108, Reno (USA) 18th to 22th November 2019 (XP051838777) discusses overall architecture and functional split relating to integrated access and backhaul.

"3rd Generation Partnership Project; Technical Specification Group Radio Access Network; NR; Backhaul Adaptation Protocol (BAP) specification (Release 16)", 3GPP TS 38.340 V1.0.0 of March 2020 (XP051861017) provides a description of a Backhaul Adaptation Protocol (BAP).

### Citation List

### Non-Patent Literature

Non-Patent Literature 1: 3 GPP Contribution "RP-182894"

### Summary

The present invention provides a communication control method according to claim 1, a chipset according to claim 2, and a relay apparatus according to claim 3.

### Brief Description of Drawings

It is generally noted that Figs. 1 to 6 do not show each and every detail of the invention but supplement an understanding thereof, forming embodiments useful for understanding the invention, whereas Fig. 7 illustrates a central aspect of the invention.
FIG. 1 is a diagram illustrating a configuration of a mobile communication system according to an embodiment.
FIG. 2 is a diagram illustrating a configuration of a base station according to an embodiment.
FIG. 3 is a diagram illustrating a configuration of a relay apparatus according to an embodiment.
FIG. 4 is a diagram illustrating a configuration of a user equipment according to an embodiment.
FIG. 5 is a diagram illustrating an example of a protocol stack configuration according to an embodiment.
FIG. 6 is a diagram illustrating an operation scenario of a mobile communication system according to an embodiment.
FIG. 7 is a flow diagram illustrating an operation example of a relay apparatus according to present invention.

### Description of Embodiments

In a situation where an upstream path with a plurality of relay apparatuses is formed between a user equipment and a first donor apparatus, when a failure occurs in a backhaul link established between a relay apparatus and an upper apparatus higher than the relay apparatus (first upper apparatus), the upstream path may need to be re-formed by re-establishing a backhaul link of the relay apparatus with the second upper apparatus.

Thus, an object of the present disclosure is to provide a communication control method and a relay apparatus that can appropriately address a failure in the backhaul link.

A mobile communication system according to an embodiment will be described with reference to the drawings. In the description of the drawings, the same or similar parts are denoted by the same or similar reference signs.

### Configuration of Mobile Communication System

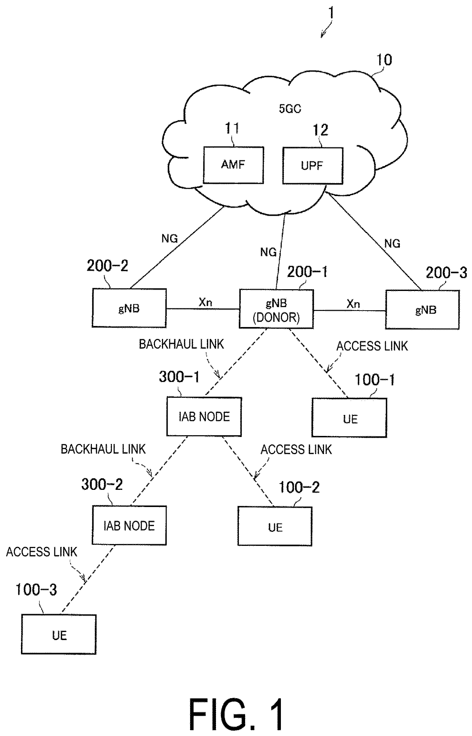

First, a configuration of a mobile communication system according to an embodiment will be described. FIG. 1 is a diagram illustrating a configuration of the mobile communication system 1 according to an embodiment. The mobile communication system 1 is a fifth generation (5G) mobile communication system based on the 3GPP standard. Specifically, a radio access scheme in the mobile communication system 1 is New Radio (NR) being a radio access scheme of 5G. Note that Long Term Evolution (LTE) may be at least partially applied to the mobile communication system 1.

As illustrated in FIG. 1, the mobile communication system 1 includes a 5G core network (5GC) 10, a user equipment (UE) 100, a base station (referred to as a gNB) 200, and an IAB node 300. The IAB node 300 is an example of a relay apparatus.

An embodiment mainly describes an example in which the base station is an NR base station. However, the base station may be an LTE base station (specifically, an eNB).

The 5GC 10 includes an Access and Mobility Management Function (AMF) 11 and a User Plane Function (UPF) 12. The AMF 11 is an apparatus that performs various types of mobility control and the like for the UE 100. By communicating with the UE 100 by using Non-Access Stratum (NAS) signaling, the AMF 11 manages information of an area in which the UE 100 exists. The UPF 12 is an apparatus that performs transfer control of user data and the like.

The gNB 200 is connected to the 5GC 10 via an interface referred to as an NG interface. FIG. 1 illustrates an example of three gNB 200-1 to gNB 200-3 that are connected to the 5GC 10. The gNB 200 is a fixed wireless communication apparatus that performs wireless communication with the UE 100. When the gNB 200 has a donor function, the gNB 200 may perform wireless communication with the IAB node that is connected to the gNB 200 wirelessly.

The gNB 200 is connected to another neighboring gNB 200 via an inter-base station interface referred to as an Xn interface. FIG. 1 illustrates an example in which the gNB 200-1 is connected to the gNB 200-2 and the gNB 200-3.

Each gNB 200 manages one or a plurality of cells. The cell is used as a term denoting a minimum unit of a wireless communication area. The cell may be used as a term denoting a function or a resource for performing wireless communication with the UE 100. One cell belongs to one carrier frequency.

The UE 100 is a mobile wireless communication apparatus that can perform wireless communication with the gNB 200. The UE 100 may perform wireless communication with the IAB node 300. The UE 100 may be any type of apparatus as long as the UE 100 performs wireless communication with the gNB 200 or the IAB node 300. For example, the UE 100 is a mobile phone terminal, a tablet terminal, a laptop PC, a sensor, an apparatus that is provided in a sensor, a vehicle, or an apparatus that is provided in a vehicle.

FIG. 1 illustrates an example in which UE 100-1 is connected to the gNB 200-1 wirelessly, UE 100-2 is connected to an IAB node 300-1 wirelessly, and UE 100-3 is connected to an IAB node 300-2 wirelessly. The UE 100-1 directly performs communication with the gNB 200-1. The UE 100-2 indirectly performs communication with the gNB 200-1 via the IAB node 300-1. The UE 100-3 indirectly performs communication with the gNB 200-1 via the IAB node 300-1 and the IAB node 300-2.

The IAB node 300 is an apparatus (relay apparatus) that is involved in communication between the eNB 200 and the UE 100, and performs relay for the communication. FIG. 1 illustrates an example in which the IAB node 300-1 is connected to the gNB 200-1 being a donor apparatus wirelessly, and the IAB node 300-2 is connected to the IAB node 300-1 wirelessly. Each IAB node 300 manages a cell. A cell ID of the cell managed by the IAB node 300 may be the same as or different from a cell ID of the cell of the donor gNB 200-1.

The IAB node 300 has a UE function (user equipment function) and a gNB function (base station function). Such UE functions may be referred to as MTs, and gNB functions may be referred to as DUs.

The IAB node 300 performs wireless communication with an upper apparatus (the gNB 200 or an upper IAB node 300) by using the UE function (MT) of the IAB node 300, and performs wireless communication with a lower apparatus (the UE 100 or a lower IAB node 300) by using the gNB function (DU) of the IAB node 300. Note that the UE function (MT) refers to at least some of the functions of the UE 100, and the IAB node 300 need not necessarily have all of the functions of the UE 100. The gNB function (DU) refers to at least some of the functions of the gNB 200, and the IAB node 300 need not necessarily have all of the functions of the gNB 200. For example, the gNB function (DU) need not include an RRC layer, a PDCP layer, or the like.

A wireless section between the UE 100 and the IAB node 300 or the gNB 200 may be referred to as an access link (or, Uu). A wireless section between the IAB node 300 and the gNB 200 or another IAB node 300 may be referred to as a backhaul link (or, Un). The backhaul link may be referred to as a fronthaul link.

Data communication in the access link and data communication in the backhaul link can be integrated and multiplexed in Layer 2, radio resources can be dynamically allocated to the data communication in the backhaul link, and paths of relay can be dynamically switched. Note that, for the access link and the backhaul link, millimeter wave bands may be used. The access link and the backhaul link may be multiplexed by means of time division multiplexing and/or frequency division multiplexing.

### Configuration of Base Station

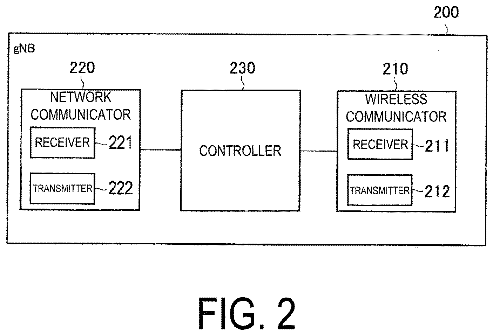

Now, a configuration of the gNB 200, corresponding to a base station according to an embodiment, will be described. FIG. 2 is a diagram illustrating a configuration of the gNB 200. As illustrated in FIG. 2, the gNB 200 includes a wireless communicator 210, a network communicator 220, and a controller 230.

The wireless communicator 210 is used for wireless communication with the UE 100 and wireless communication with the IAB node 300. The wireless communicator 210 includes a receiver 211 and a transmitter 212. The receiver 211 performs various types of reception while being controlled by the controller 230. The receiver 211 includes an antenna, and converts a radio signal received by the antenna into a baseband signal (received signal) and outputs the baseband signal to the controller 230. The transmitter 212 performs various types of transmission while being controlled by the controller 230. The transmitter 212 includes an antenna, and converts a baseband signal (transmission signal) to be output by the controller 230 into a radio signal and transmits the radio signal from the antenna.

The network communicator 220 is used for wired communication (or wireless communication) with the 5GC 10 and wired communication (or wireless communication) with another neighboring gNB 200. The network communicator 220 includes a receiver 221 and a transmitter 222. The receiver 221 performs various types of reception while being controlled by the controller 230. The receiver 221 receives a signal from the outside and outputs the received signal to the controller 230. The transmitter 222 performs various types of transmission while being controlled by the controller 230. The transmitter 222 transmits a transmission signal output by the controller 230 to the outside.

The controller 230 performs various types of control for the gNB 200. The controller 230 includes at least one memory and at least one processor electrically connected to the memory. The memory stores programs to be executed by the processor and information to be used for processes by the processor. The processor may include a baseband processor and a CPU. The baseband processor performs modulation and demodulation, and coding and decoding of a baseband signal, and the like. The CPU executes the programs stored in the memory to perform various types of processes. The processor executes processing described below.

### Configuration of Relay Apparatus

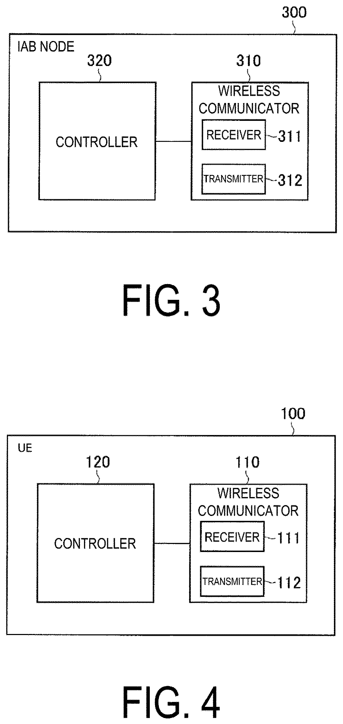

Now, a configuration of the IAB node 300, corresponding to a relay apparatus according to an embodiment, will be described. FIG. 3 is a diagram illustrating a configuration of the IAB node 300. As illustrated in FIG. 3, the IAB node 300 includes a wireless communicator 310 and a controller 320. The IAB node 300 may include a plurality of wireless communicators 310.

The wireless communicator 310 is used for wireless communication (backhaul link) with the gNB 200 and wireless communication (access link) with the UE 100. The wireless communicator 310 for the backhaul link communication and the wireless communicator 310 for the access link communication may be provided separately.

The wireless communicator 310 includes a receiver 311 and a transmitter 312. The receiver 311 performs various types of reception while being controlled by the controller 320. The receiver 311 includes an antenna, and converts a radio signal received by the antenna into a baseband signal (received signal) and outputs the baseband signal to the controller 320. The transmitter 312 performs various types of transmission while being controlled by the controller 320. The transmitter 312 includes an antenna, and converts a baseband signal (transmission signal) to be output by the controller 320 into a radio signal and transmits the radio signal from the antenna.

The controller 320 performs various types of control in the IAB node 300. The controller 320 includes at least one memory and at least one processor electrically connected to the memory. The memory stores programs to be executed by the processor and information to be used for processes by the processor. The processor may include a baseband processor and a CPU. The baseband processor performs modulation and demodulation, and coding and decoding of a baseband signal, and the like. The CPU executes the programs stored in the memory to perform various types of processes. The processor executes processing described below.

### Configuration of User Equipment

Now, a configuration of the UE 100, corresponding to a user equipment according to an embodiment, will be described. FIG. 4 is a diagram illustrating a configuration of the UE 100. As illustrated in FIG. 4, the UE 100 includes a wireless communicator 110 and a controller 120.

The wireless communicator 110 is used for wireless communication in the access link, specifically, wireless communication with the gNB 200 and wireless communication with the IAB node 300. The wireless communicator 110 includes a receiver 111 and a transmitter 112. The receiver 111 performs various types of reception while being controlled by the controller 120. The receiver 111 includes an antenna, and converts a radio signal received by the antenna into a baseband signal (received signal) and outputs the baseband signal to the controller 120. The transmitter 112 performs various types of transmission while being controlled by the controller 120. The transmitter 112 includes an antenna, and converts a baseband signal (transmission signal) to be output by the controller 120 into a radio signal and transmits the radio signal from the antenna.

The controller 120 performs various types of control in the UE 100. The controller 120 includes at least one memory and at least one processor electrically connected to the memory. The memory stores programs to be executed by the processor and information to be used for processes by the processor. The processor may include a baseband processor and a CPU. The baseband processor performs modulation and demodulation, and coding and decoding of a baseband signal, and the like. The CPU executes the programs stored in the memory to perform various types of processes. The processor executes processing described below.

### Example of Protocol Stack Configuration

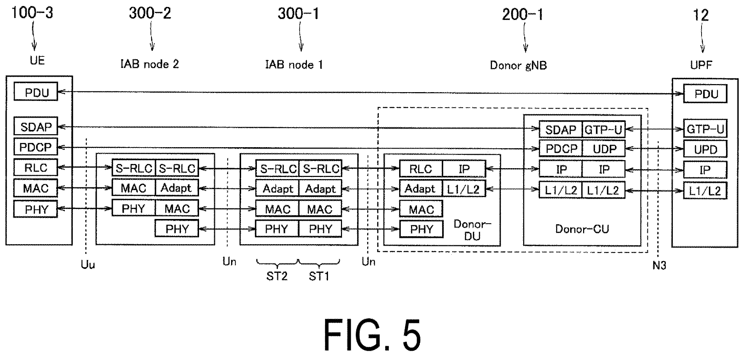

Now, an example of a protocol stack configuration in the mobile communication system 1 according to an embodiment will be described. FIG. 5 is a diagram illustrating an example of a protocol stack configuration of a user plane. FIG. 5 illustrates an example of a protocol stack configuration related to user data transmission between the UE 100-3 and the UPF 12 of the 5GC 10 illustrated in FIG. 1.

As illustrated in FIG. 5, the UPF 12 includes a GPRS Tunneling Protocol for User Plane (GTP-U), a User Datagram Protocol (UDP), an Internet Protocol (IP), and a Layer 1/Layer 2 (L1/L2). The gNB 200-1 (donor gNB) is provided with a protocol stack corresponding to these.

The gNB 200-1 includes a central unit (CU) and a distributed unit (DU). Of the protocol stack of the radio interface, the CU includes layers at and higher than a Packet Data Convergence Protocol (PDCP), the DU includes layers at and lower than a Radio Link Control (RLC), and the CU and the DU are connected via an interface referred to as an F1 interface.

Specifically, the CU includes a Service Data Adaptation Protocol (SDAP), a PDCP, an IP, and an L1/L2. The SDAP and the PDCP of the CU perform communication with the SDAP and the PDCP of the UE 100 via the DU, the IAB node 300-1, and the IAB node 300-2.

Of the protocol stack of the radio interface, the DU includes an RLC, an adaptation layer (Adapt), a Medium Access Control (MAC), and a Physical layer (PHY). These protocol stacks are protocol stacks for the gNB. Note that the upper/lower relationship between the adaptation layer and the RLC (S-RLC) may be inverted. The adaptation layer may be referred to as a backhaul adaptation protocol (BAP) layer.

In the IAB node 300-1, a protocol stack ST1 for the UE corresponding to these is provided. In addition, in the IAB node 300-1, a protocol stack ST2 for the gNB is provided. Each of the protocol stack ST1 and the protocol stack ST2 includes layers (sub-layers) at or lower than Layer 2. Specifically, the IAB node 300-1 is a Layer 2 relay apparatus that performs relay of user data by using the layers at or lower than Layer 2. The IAB node 300-1 performs relay of data without using layers at or higher than Layer 3 (specifically, layers at or higher than the PDCP). Note that the IAB node 300-2 includes a protocol stack configuration similar to that of the IAB node 300-1.

The protocol stack configuration in the user plane has been described above. However, in the control plane, each of the gNB 200-1, the IAB node 300-1, the IAB node 300-2, and the UE 100-3 includes a Radio Resource Control (RRC) corresponding to Layer 3.

RRC connection is established between the RRC of the gNB 200-1 (donor gNB) and the RRC of the IAB node 300-1, and an RRC message is transmitted and received using the RRC connection. RRC connection is established between the RRC of the gNB 200-1 and the RRC of the IAB node 300-2, and an RRC message is transmitted and received using the RRC connection. In addition, RRC connection is established between the RRC of the gNB 200-1 and the RRC of the UE 100-3, and an RRC message is transmitted and received using the RRC connection.

### Operation according to present invention

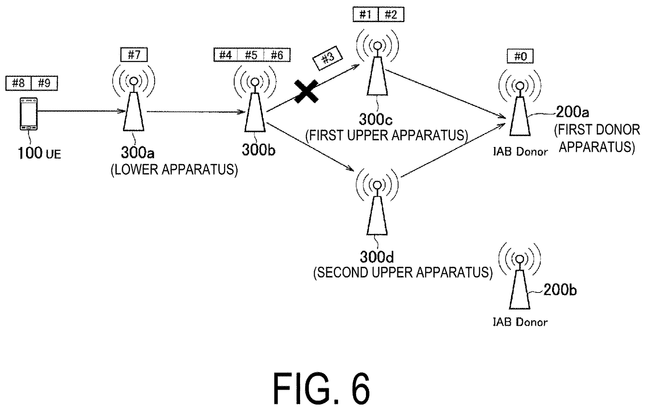

FIG. 6 is a diagram illustrating an operation scenario of the mobile communication system 1 according to present invention.

As illustrated in FIG. 6, an upstream path with a plurality of relay apparatuses (an IAB node 300a, an IAB node 300b, and an IAB node 300c) is formed between the UE 100 and a donor gNB 200a. The donor gNB 200a corresponds to a first donor apparatus.

The IAB node 300b (relay apparatus) on the upstream path will be mainly described below. A lower apparatus lower than the IAB node 300b in the upstream path is the IAB node 300a, and a first upper apparatus higher than the IAB node 300b in the upstream path is the IAB node 300c. Also, it is assumed that a failure occurs in a backhaul link established between the IAB node 300b and the IAB node 300c (the first upper apparatus), and the IAB node 300b re-establishes the backhaul link with the IAB node 300d (second upper apparatus).

The donor gNB 200a manages the IAB node 300a, the IAB node 300b, the IAB node 300c, and the IAB node 300d, and functions as a donor for the IAB node 300a, the IAB node 300b, the IAB node 300c, and the IAB node 300d. In other words, the IAB node 300a, the IAB node 300b, the IAB node 300c, and the IAB node 300d are under the control of the donor gNB 200a.

Alternatively, a donor gNB 200b manages the IAB node 300d and may function as a donor for the IAB node 300d. In other words, the IAB node 300d may be under the control of donor gNB 200b rather than under the control of the donor gNB 200a. The donor gNB managing the IAB node 300d is hereinafter referred to as a second donor apparatus. The second donor apparatus is a donor gNB 200a or donor gNB 200b.

The UE 100 transmits upstream data to the donor gNB 200a via a path through the IAB node 300a, the IAB node 300b, and the IAB node 300c and not via the IAB node 300d. In an embodiment, the upstream data includes PDCP Protocol Data Units (PDUs). However, assuming that there is no division (segment) of a PDCP PDU, the upstream data may include RLC SDUs. According to present invention, the upstream data include BAP PDUs.

PDCP PDU #0 has been received by the donor gNB 200a, and PDCP PDUs #1 and #2 have been received by the IAB node 300c. PDCP PDU #3 has yet to be received by the IAB node 300c and has been transmitted by the RLC layer of the IAB node 300b. PDCP PDUs #4, #5, and #6 have been received by the IAB node 300b but have yet to be passed from the PDCP layer to the RLC layer at the IAB node 300b. PDCP PDU #7 has been received by the IAB node 300a. PDCP PDUs #8 and #9 have been buffered on the UE 100 side.

In such circumstances, a backhaul link radio link failure (i.e., BH RLF) occurs between the IAB node 300b and the IAB node 300c. The IAB node 300b re-establishes a backhaul link with the IAB node 300d, used as a new parent node (upper apparatus). For example, the IAB node 300b re-establishes the backhaul link with the IAB node 300d by performing RRC re-establishment processing via the IAB node 300d. After RRC re-establishment, the RLC entity of the IAB node 300b is re-established. In this regard, in the IAB node 300b, PDCP PDUs #3, #4, #5, and #6, having yet to be transmitted, have been buffered, for example, in the BAP layer.

Thus, in an embodiment, in a situation in which an upstream path is formed between the UE 100 and the donor gNB 200a (first donor apparatus), when a failure occurs in the backhaul link established between the IAB node 300b and the IAB node 300c, the IAB node 300b re-establishes a backhaul link of the IAB node 300b with the IAB node 300d (second upper apparatus). Thus, the upstream path is re-formed.

In an embodiment, the BAP layer of the IAB node 300b may transfer buffered upstream data (i.e., PDCP PDUs #3, #4, #5, and #6) to the IAB node 300d. In other words, the BAP layer of the IAB node 300b may reroute the upstream data by using a new upstream path.

However, when the IAB node 300d is not under the control of the donor gNB 200a but under the control of the donor gNB 200b, even in response to receiving, via the IAB node 300d, the upstream data buffered by the IAB node 300b, the donor gNB 200b fails to process the upstream data received. Specifically, the PDCP PDUs are encoded by the UE 100 by using a security key, a PDCP entity to be paired with the security key is present in the donor gNB 200a, and the donor gNB 200a performs decoding (decrypting) using the security key. However, the donor gNB 200b does not have the security key and fails to decode the PDCP PDUs.

In contrast, when the IAB node 300d is under the control of the donor gNB 200a, in response to receiving, via the IAB node 300d, the upstream data buffered by the IAB node 300b, the donor gNB 200a can process the upstream data received.

In an embodiment, the IAB node 300b can properly address a failure in the backhaul link by determining whether to transfer the buffered upstream data to the IAB node 300d depending on whether the IAB node 300d is under the control of the donor gNB 200a.

Firstly, the IAB node 300b transfers the upstream data received from the IAB node 300a, used as a lower apparatus lower than the IAB node 300b, to the IAB node 300c, used as a first upper apparatus higher than the IAB node 300b. Additionally, the IAB node 300b also buffers upstream data having yet to be transmitted to the IAB node 300c.

Secondly, when a failure occurs in the backhaul link established between the IAB node 300b and the IAB node 300c, the IAB node 300b re-establishes a backhaul link of the IAB node 300b with the IAB node 300d, used as a second upper apparatus.

Thirdly, the BAP layer of the IAB node 300b determines whether to transfer the buffered upstream data to the IAB node 300d based on whether the donor apparatus (second donor apparatus) managing the IAB node 300d is identical to the donor gNB 200a (first donor apparatus).

Specifically, in response to determining that the donor apparatus of the IAB node 300d is identical to the donor gNB 200a, the BAP layer of the IAB node 300b transfers the buffered upstream data to the IAB node 300d. In this case, in response to completion of transfer of the buffered upstream data, the BAP layer or RLC layer of the IAB node 300b may transmit an ACK (e.g., RLC ACK) corresponding to the buffered upstream data, to the IAB node 300a, used as a lower apparatus.

On the other hand, in response to determining that the donor apparatus of the IAB node 300d is different from the donor gNB 200a (e.g., when the donor apparatus of the IAB node 300d is the donor gNB 200b), the BAP layer of the IAB node 300b discards the buffered upstream data. Also, in response to determining that the donor apparatus of the IAB node 300d is different from the donor gNB 200a, the BAP layer or RLC layer of the IAB node 300b may transmit a NACK (e.g., RLC NACK) corresponding to the buffered upstream data, to the IAB node 300a, used as a lower apparatus.

In an embodiment, the MT of the IAB node 300b may receive, from the IAB node 300d, an identifier related to the donor apparatus of the IAB node 300d. Based on the identifier received from the IAB node 300d, the MT or BAP layer of the IAB node 300b may determine whether the donor apparatus of the IAB node 300d is identical to the donor gNB 200a.

For example, the IAB node 300b may receive, from the IAB node 300d, an RRC Reconfiguration message including an identifier related to the donor apparatus of the IAB node 300d. The RRC Reconfiguration message may be transmitted from the donor gNB 200a to the IAB node 300b via the IAB node 300d.

Alternatively, the IAB node 300b may receive, from the IAB node 300c, the RRC Reconfiguration message including the identifier related to the donor apparatus of the IAB node 300d. The RRC Reconfiguration message may be transmitted from the donor gNB 200a to the IAB node 300b via the IAB node 300c.

The RRC Reconfiguration message may be an RRC Reconfiguration message for handover or an RRC Reconfiguration message for RRC re-establishment. The MT of the IAB node 300b may hold the identifier included in the RRC Reconfiguration message received.

Alternatively, the IAB node 300b may receive, from the IAB node 300d, a System Information Block (SIB) including the identifier related to the donor apparatus of the IAB node 300d. Note that the SIB is broadcast information broadcast by the IAB node 300d. The MT of the IAB node 300b may hold the identifier included in the SIB received.

The identifier related to the donor apparatus of the IAB node 300d includes at least one of a base station identifier (gNB ID) for the donor apparatus of the IAB node 300d and an identifier for the Central Unit (CU) of the donor apparatus of the IAB node 300d. The MT or BAP layer of the IAB node 300b compares the identifier (previously held identifier) related to the donor gNB 200a with the identifier (newly acquired identifier) related to the donor apparatus of the IAB node 300d, and only when the identifiers match, determines that the donor apparatus managing the IAB node 300d is identical to the donor gNB 200a.

Alternatively, the identifier related to the donor apparatus of the IAB node 300d may include at least one of an identifier indicating whether the donor apparatus of the IAB node 300d is identical to the donor gNB 200a and an identifier indicating whether the buffered upstream data is permitted to be transferred to the IAB node 300d. The MT or BAP layer of the IAB node 300b determines, based on the identifier as described above, whether the donor apparatus managing the IAB node 300d is identical to the donor gNB 200a, i.e., whether the buffered upstream data is permitted to be transferred to the IAB node 300d.

Alternatively, the MT of the IAB node 300b may receive, from the IAB node 300c, a list of IAB nodes 300b that are under the control of the donor gNB 200a. The list may be included in the RRC Reconfiguration message transmitted from the donor gNB 200a to the IAB node 300b via the IAB node 300c. The MT or BAP layer of the IAB node 300b determines whether the donor apparatus of the IAB node 300d is identical to the donor gNB 200a based on the list received from the IAB node 300c. For example, when the identifier related to the IAB node 300d is included in the list, the MT or BAP layer of the IAB node 300b determines that the donor apparatus of the IAB node 300d is identical to the donor gNB 200a.

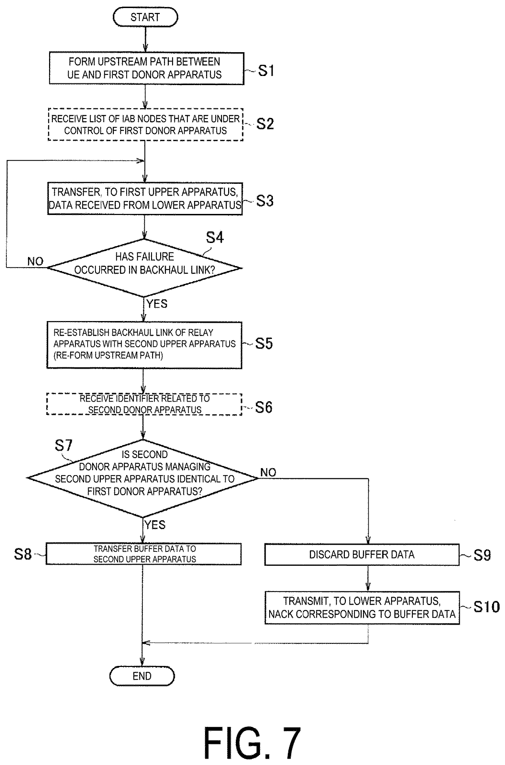

FIG. 7 is a flow diagram illustrating an operation example of a relay apparatus according to an embodiment. Here, operations of the IAB node 300b in the operation scenario illustrated in FIG. 6 will be described. However, the operations illustrated in FIG. 7 may be performed by the IAB node 300a illustrated in FIG. 6. The IAB node 300a is an IAB node with an access link with the UE 100, and may be referred to as an access IAB node.

As illustrated in FIG. 7, in step S1, the IAB node 300b, along with the IAB nodes 300a and 300c, forms an upstream path between the UE 100 and the first donor apparatus (donor gNB 200a).

In step S2, the IAB node 300b receives, from the IAB node 300c, a list of IAB nodes that are under the control of the first donor apparatus (donor gNB 200a). The list may be a list of identifiers for IAB nodes that are under the control of the first donor apparatus (donor gNB 200a). The list may be transmitted from the first donor apparatus (donor gNB 200a) to the IAB node 300b via the IAB node 300c. Note that processing in step S6 described below may be performed instead of the processing in step S2.

In step S3, the IAB node 300b transfers, to the first upper apparatus (IAB node 300bc) higher than the IAB node 300b, the upstream data received from the lower apparatus (IAB node 300a) lower than the IAB node 300b in the upstream path. Additionally, the IAB node 300b also buffers upstream data having yet to be transmitted to the IAB node 300c.

In step S4, the IAB node 300b determines whether a failure (BH RLF) has occurred in the backhaul link established between the IAB node 300b and the first upper apparatus (IAB node 300c). With no BH RLF occurring (step S4: NO), the processing returns to step S3. On the other hand, with a BH RLF having occurred (step S4: YES), the processing proceeds to step S5.

In step S5, the IAB node 300b re-establishes the backhaul link of the IAB node 300b with the second upper apparatus (IAB node 300d). Thus, the upstream path is re-formed.

In step S6, the MT of the IAB node 300b receives, from the IAB node 300d, the identifier related to the donor apparatus of the IAB node 300d. The IAB node 300b may receive, from the IAB node 300d, the RRC Reconfiguration message including the identifier related to the donor apparatus of the IAB node 300d. The RRC Reconfiguration message may be transmitted from the donor gNB 200a to the IAB node 300b via the IAB node 300d. Note that, with the processing in step S2 described above executed, the processing in step S6 need not be performed. For determination by the IAB node 300b in step S7 described below, at least one of the processing in step S2 and the processing in step S6 needs to be performed. Both the processing in step S2 and the processing in step S6 may be performed.

In step S7, the IAB node 300b determines whether the second donor apparatus managing the second upper apparatus (IAB node 300d) is identical to the first donor apparatus (donor gNB 200a) based on the list received in step S2 or the identifier received in step S6. In other words, the IAB node 300b determines whether the buffered upstream data is permitted to be transferred to the IAB node 300d.

In response to determining that the second donor apparatus managing the second upper apparatus (IAB node 300d) is identical to the first donor apparatus (donor gNB 200a) (step S7: YES), in step S8, the IAB node 300b transfers the buffered upstream data to the second upper apparatus (IAB node 300d).

On the other hand, in response to determining that the second donor apparatus managing the second upper apparatus (IAB node 300d) is different from the first donor apparatus (donor gNB 200a) (step S7: NO), in step S9, the IAB node 300b discards the buffered upstream data. Then, in step S10, the IAB node 300b transmits a NACK corresponding to the buffered upstream data to the IAB node 300a, used as a lower apparatus.

### Other Embodiments

In the embodiments described above, aside from the donor gNB 200, a base station (hereinafter referred to as a master base station) may be present that manages each IAB node 300. The master base station may be an LTE base station. The MT of each IAB node 300 may have two connections (i.e., dual connectivity) including a connection to the master base station and a connection to the upper apparatus (upper IAB node or donor gNB). The master base station may be a master node, and the connection to the master base station may be a Master Cell Group (MCG) link. The upper apparatus (upper IAB node or donor gNB) may be a secondary node, and the connection to the upper apparatus may be a Secondary Cell Group (SCG) link. Under such assumptions, the MT of the IAB node 300b may receive the list in step S2 or the identifier in step S6 in FIG. 7 from the master base station via the MCG link.

In the embodiments described above, an example has been mainly described, in which the mobile communication system 1 is a 5G mobile communication system. However, the base station in the mobile communication system 1 may be an eNB used as an LTE base station. The core network in the mobile communication system 1 may be an Evolved Packet Core (EPC). Furthermore, the gNB can also be connected to the EPC, the eNB can also be connected to the 5GC, and the gNB and the eNB can also be connected via an inter-base station interface (Xn interface, X2 interface).

A program that causes a computer to execute each of the processing operations according to the embodiments described above may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited and may be, for example, a recording medium such as a CD-ROM or a DVD-ROM. A chip set may be provided that includes a memory that stores a program for executing each of the processing operations performed by the UE 100, the gNB 200, or the IAB node 300 and a processor that executes the program stored in the memory.

This application claims priority to Japanese Patent Application No. 2019-145743 (filed on August 7, 2019).

## Claims

1. A communication control method performed in a Backhaul Adaptation Protocol, BAP, layer of a relay apparatus (300b), the relay apparatus (300b) belonging to an upstream path formed with a plurality of relay apparatuses, the communication control method comprising:
receiving BAP PDUs from a lower relay apparatus (300a) lower than the relay apparatus (300b);
transferring (S3) the BAP PDUs to a first upper relay apparatus (300c) belonging to the upstream path;
in response to a failure occurred in a backhaul link established between the first upper relay apparatus (300c) and the relay apparatus (300b), re-establishing a backhaul link with a second upper relay apparatus (300d);
receiving, from a first donor apparatus (200a) of the relay apparatus (300b) via the second upper relay apparatus (300d), a Radio Resource Control, RRC, reconfiguration message including an identifier related to the donor apparatus of the second upper relay apparatus (300d); and
based on the identifier included in the RRC reconfiguration message, transferring (S8) the BAP PDUs to the second upper relay apparatus (300d) having the same donor apparatus as the first upper relay apparatus (300c).

2. A chipset provided in a relay apparatus (300b) comprising a Backhaul Adaptation Protocol, BAP, layer, the relay apparatus (300b) belonging to an upstream path formed with a plurality of relay apparatuses, wherein
the chip set comprising a processor and a memory, the processor configured to receive BAP PDUs from a lower relay apparatus (300a) lower than the relay apparatus (300b);
transfer the BAP PDUs to a first upper relay apparatus (300c) belonging to the upstream path;
in response to a failure occurred in a backhaul link established between the first upper relay apparatus (300c) and the relay apparatus (300b), re-establish a backhaul link with a second upper relay apparatus (300d);
receive from a first donor apparatus (200a) of the relay apparatus (300b) via the second upper relay apparatus (300d), a Radio Resource Control, RRC, reconfiguration message including an identifier related to a donor apparatus of the second upper relay apparatus (300d); and
based on the identifier included in the RRC reconfiguration message, transfer the BAP PDUs to the second upper relay apparatus (300d) having the same donor apparatus as the first upper relay apparatus (300c).

3. A relay apparatus (300b) comprising a chipset according to claim 2.

## Patentansprüche

1. Kommunikationssteuerverfahren, das in einer Backhaul-Anpassungsprotokoll-, BAP-, -Schicht einer Relaisvorrichtung (300b) ausgeführt wird, wobei die Relaisvorrichtung (300b) zu einem Upstream-Pfad gehört, der mit einer Mehrzahl von Relaisvorrichtungen ausgebildet ist, wobei das Kommunikationssteuerverfahren aufweist:
Empfangen von BAP-PDUs von einer unteren Relaisvorrichtung (300a), die unter der Relaisvorrichtung (300b) liegt;
Übertragen (S3) der BAP-PDUs an eine erste obere Relaisvorrichtung (300c), die zu dem Upstream-Pfad gehört;
als Reaktion auf einen Ausfall, der in einer zwischen der ersten oberen Relaisvorrichtung (300c) und der Relaisvorrichtung (300b) hergestellten Backhaul-Verbindung aufgetreten ist, Wiederherstellen einer Backhaul-Verbindung mit einer zweiten oberen Relaisvorrichtung (300d);
Empfangen, von einer ersten Gebervorrichtung (200a) der Relaisvorrichtung (300b) über die zweite obere Relaisvorrichtung (300d), einer Funkressourcensteuerungs-, RRC-, -Neukonfigurationsnachricht, die eine Kennung enthält, die sich auf die Gebervorrichtung der zweiten oberen Relaisvorrichtung (300d) bezieht;
Übertragen (S8), basierend auf der in der RRC-Neukonfigurationsnachricht enthaltenen Kennung, der BAP-PDUs an die zweite obere Relaisvorrichtung (300d), die die gleiche Gebervorrichtung wie die erste obere Relaisvorrichtung (300c) aufweist.

2. Chipsatz, der in einer Relaisvorrichtung (300b) bereitgestellt ist, die eine Backhaul-Anpassungsprotokoll-, BAP-, -Schicht aufweist, wobei die Relaisvorrichtung (300b) zu einem mit einer Mehrzahl von Relaisvorrichtungen ausgebildeten Upstream-Pfad gehört, wobei
der Chipsatz einen Prozessor und einen Speicher aufweist, wobei der Prozessor konfiguriert ist, um:
BAP-PDUs von einer unteren Relaisvorrichtung (300a) zu empfangen, die unterhalb der Relaisvorrichtung (300b) liegt;
die BAP-PDUs an eine erste obere Relaisvorrichtung (300c) zu übertragen, die zu dem Upstream-Pfad gehört;
als Reaktion auf einen Ausfall, der in einer zwischen der ersten oberen Relaisvorrichtung (300c) und der Relaisvorrichtung (300b) hergestellten Backhaul-Verbindung aufgetreten ist, eine Backhaul-Verbindung mit einer zweiten oberen Relaisvorrichtung (300d) wiederherzustellen;
von einer ersten Gebervorrichtung (200a) der Relaisvorrichtung (300b) über die zweite obere Relaisvorrichtung (300d) eine Funkressourcensteuerungs-, RRC-, Neukonfigurationsnachricht zu empfangen, die eine Kennung enthält, die sich auf eine Gebervorrichtung der zweiten oberen Relaisvorrichtung (300d) bezieht, und
basierend auf der in der RRC-Neukonfigurationsnachricht enthaltenen Kennung die BAP-PDUs an die zweite obere Relaisvorrichtung (300d) zu übertragen, die die gleiche Gebervorrichtung wie die erste obere Relaisvorrichtung (300c) hat.

3. Relaisvorrichtung (300b), aufweisend einen Chipsatz gemäß Anspruch 2.

## Revendications

1. Procédé de commande de communication mis en œuvre dans une couche de protocole d'adaptation de backhaul, BAP, d'un dispositif de relais (300b), le dispositif de relais (300b) appartenant à un chemin amont formé avec une pluralité de dispositifs de relais, le procédé de commande de communication comprenant :
la réception de PDU BAP provenant d'un dispositif de relais inférieur (300a) situé plus bas que le dispositif de relais (300b) ;
le transfert (S3) des PDU BAP vers un premier dispositif de relais supérieur (300c) appartenant au chemin amont ;
en réponse à une défaillance survenue dans une liaison de backhaul établie entre le premier dispositif de relais supérieur (300c) et le dispositif de relais (300b), le rétablissement d'une liaison de backhaul avec un deuxième dispositif de relais supérieur (300d) ;
la réception, depuis un premier dispositif donneur (200a) du dispositif de relais (300b) via le deuxième dispositif de relais supérieur (300d), d'un message de reconfiguration de commande de ressource radio, RRC, comprenant un identifiant lié au dispositif donneur du deuxième dispositif de relais supérieur (300d) ; et,
sur la base de l'identifiant inclus dans le message de reconfiguration RRC, le transfert (S8) des PDU BAP vers le deuxième dispositif de relais supérieur (300d) ayant le même dispositif donneur que le premier dispositif de relais supérieur (300c).

2. Chipset prévu dans un dispositif de relais (300b) comprenant une couche de protocole d'adaptation de backhaul, BAP, le dispositif de relais (300b) appartenant à un chemin amont formé avec une pluralité de dispositifs de relais, dans lequel
le chipset comprend un processeur et une mémoire, le processeur étant configuré pour :
recevoir des PDU BAP provenant d'un dispositif de relais inférieur (300a) situé plus bas que le dispositif de relais (300b) ;
transférer les PDU BAP vers un premier dispositif de relais supérieur (300c) appartenant au chemin amont ;
en réponse à une défaillance survenue dans une liaison de backhaul établie entre le premier dispositif de relais supérieur (300c) et le dispositif de relais (300b), rétablir une liaison de backhaul avec un deuxième dispositif de relais supérieur (300d) ;
recevoir, depuis un premier dispositif donneur (200a) du dispositif de relais (300b) via le deuxième dispositif de relais supérieur (300d), un message de reconfiguration de commande de ressource radio, RRC, comprenant un identifiant lié à un dispositif donneur du deuxième dispositif de relais supérieur (300d) ; et
sur la base de l'identifiant inclus dans le message de reconfiguration RRC, transférer les PDU BAP vers le deuxième dispositif de relais supérieur (300d) ayant le même dispositif donneur que le premier dispositif de relais supérieur (300c).

3. Dispositif de relais (300b) comprenant un chipset selon la revendication 2.
